# EUROPEAN PATENT APPLICATION

(11) **EP 1 936 371 A1**
(43) Date of publication of application: **25.06.2008**
(21) Application number: 07024673.1
(22) Date of filing: 19.12.2007
(51) Int. Cl.: G01N 33/00, G01N 1/22

(54) **Exhaust gas measuring bag**

(30) Priority: 21.12.2006 JP 2006344742
(71) Applicant: Horiba, Ltd., Kyoto-city, Kyoto 601-8510 (JP)
(72) Inventor: Miyai, Masaru, Kyoto-city Kyoto 601-8510 (JP); Asami, Tetsuji, Kyoto-city Kyoto 601-8510 (JP)
(74) Representative: Müller - Hoffmann & Partner

(57) **Abstract**

An exhaust gas measuring bag includes a gas connection part (1) which is connected to a constant volume sampling passage (Z5) flowing measurement gas therethrough for analyzing various components included in exhaust gas (G) of the automobile etc. therethrough and has an internal passage flowing the gas taken from the constant volume sampling passage (Z5) therethrough; a pipe (2) which is connected to an internal passage of the gas connection part (1) and on which a plurality of gas inlet/outlet holes (21) for ejecting the gas are formed; a bag body (3) which is deformable and has an internal space (30) for storing at least the connection side of the gas connection part (1) to the pipe (2) and the whole of the pipe (2) therein and encloses gas ejected from the gas inlet/outlet holes (21) into the internal space (30) therein; a gas exhaust port (4) which is provided at the gas connection part (1) and exhausts the gas enclosed in the internal space (30) to the constant volume sampling passage (Z5); and a check valve (5) which is disposed on an exhaust passage (13), opens the exhaust passage (13) at the time of exhaust of the gas, thereby allowing the gas to pass and closes the exhaust passage (13) at the time of non-exhaust of the gas, thereby preventing passage of the gas.

## Description

### BACKGROUND OF THE INVENTION

### Field of the Invention

The present invention relates to an exhaust gas measuring bag for analyzing various components included in exhaust gas of the automobile, for example.

### Description of the Background Art

Conventionally, for example, when gas concentration is measured according to a constant volume sampling (CVS) method to analyze the exhaust gas emitted from an automobile engine or the like, the exhaust gas, flow of which varies transiently, is diluted in the atmosphere and the diluent gas is stored in an exhaust gas measuring bag.

Specifically, this type of exhaust gas measuring bag includes a bag body elastically formed by bonding, for example, fluororesin sheets to each other, a pipe disposed within the bag body in the shape of a numeral 8 when viewed in a plan view and a gas connection part which is disposed in the center of the 8-like pipe and connects an external gas passage to an internal passage of the pipe. A plurality of gas inlet/outlet holes each having a small diameter (for example, an enough size to eject gas by a pressure loss) are formed on a circumference of the pipe along an entire length thereof at regular intervals.

By connecting the gas connection part of the exhaust gas measuring bag to a constant volume sampling passage through which the diluent gas flows and introducing the diluent gas from the constant volume sampling passage into the pipe through the gas connection part, the diluent gas is ejected into the bag body through the plurality of gas inlet/outlet holes formed on the pipe. The diluent gas ejected into the bag body through the gas inlet/outlet holes uniformly spreads in the bag body so that the bag body may be filled with gas of uniform concentration.

When being sucked by a suction pump provided downstream from the exhaust gas measuring bag, the diluent gas in the bag body is passed from the gas inlet/outlet holes of the pipe to a gas analyzing part through the internal passage of the pipe and the gas connection part and is analyzed at the gas analyzing part. On completion of measurement of the gas, if another gas is introduced into the exhaust gas measuring bag made empty in the same manner as described, the next measurement can be sequentially made (refer to Patent document 1).
[Patent document 1]
Japanese Unexamined Patent Publication No. 2005-055333

However, with such a conventional configuration, since the gas is introduced and exhausted the same gas inlet/outlet holes, the gas cannot be easily exhausted due to a pressure loss of the gas inlet/outlet holes. For this reason, so-called back purge of repeatedly performing suction and exhaust of air to clean the inside of the bag body and so-called back dump of completely exhausting the gas in the bag body take a long time. When one attempts to increase exhaust speed, a large-size powerful pump is required, resulting in an increase in size and costs of the system. For example, when a part of the bag body blocks up the gas inlet/outlet holes during exhaust, the exhaust speed is lowered and back purge and back dump disadvantageously takes a very long time.

### SUMMARY OF THE INVENTION

In light of the above-mentioned problems, an object of the present invention is to provide an exhaust gas measuring bag which can smoothly exhaust gas and perform back purge and back dump in a short period of time without leading to an increase in size and costs.

The object underlying the present invention is achieved by an exhaust gas measuring bag according to independent claim 1. Preferred embodiments of the exhaust gas measuring bag according to the present invention are within the scope of the dependent claims.

That is, an exhaust gas measuring bag according to the present invention includes a gas connection part which is connected to an external passage flowing measurement gas therethrough for analyzing various components included in the exhaust gas of the automobile etc. and has an internal passage flowing the gas taken from the external passage therethrough; a pipe which is connected to the internal passage of the gas connection part and on which a plurality of gas ejection holes for ejecting the gas are formed; a bag body which is deformable and has an internal space for storing at least a connection side of the gas connection part to the pipe and the whole of the pipe therein and encloses gas ejected from the gas ejection holes into the internal space therein; a gas exhaust port which is provided at the gas connection part or a member separated from the gas connection part and exhausts the gas enclosed in the internal space to the external passage; and a valve which is disposed on an exhaust passage connecting the gas exhaust port to the external passage, opens the exhaust passage at the time of exhaust of the gas, thereby allowing the gas to pass and closes the exhaust passage at the time of non-exhaust of the gas, thereby preventing passage of the gas.

With such configuration, by separately providing the gas ejection holes for ejecting the gas into the internal space and the gas exhaust port for forcibly exhausting the gas enclosed in the internal space and operating the valve, the gas is exhausted from the gas exhaust port only when the gas in the bag body is exhausted. Thus, a decrease in the exhaust speed due to a pressure loss at the time of exhaust of the gas is hard to occur, thereby preventing an increase in size and costs of the system. Moreover, the disadvantage that a part of the bag body blocks the gas exhaust port can be easily prevented, thereby preventing a decrease in the exhaust speed due to such disadvantage.

That is, it is possible to provide the exhaust gas measuring bag which can smoothly exhaust gas and perform back purge and back dump in a short period of time without leading to an increase in size and costs of the system.

As a desired mode of the present invention, it is preferred that the valve is a check valve including an actuator which can move forward and backward between a closed position where the exhaust passage is closed and an opened position where the exhaust passage is opened and a biasing member for biasing the actuator from the opened position toward the closed position at all times. The check valve with such configuration allows the gas to pass by moving the actuator from the closed position to the opened position with the exhaust force exceeding a biasing force of the biasing member at the time of exhaust of the gas, and prevents the passage of the gas by maintaining the actuator at the opened position at the time of non-exhaust. Thus, in spite of simple configuration, the disadvantage that exhaust at the time of filling of the gas can be prevented.

At this time, the internal passage includes a central passage, an end of which is connected to the external passage, a flow dividing passage, an end of which is connected to the pipe and an exhaust passage, an end of which is provided with the gas exhaust port, and at least connects parts of internal space in the central passage, the flow dividing passage and the exhaust passage to each other, and the check valve is disposed on the exhaust passage. The check valve is automatically set at the closed position by utilizing the biasing force of the biasing member at the time of non-exhaust of the gas and set at the opened position by utilizing pressure of the gas at the time of exhaust of the gas.

As a desired mode of the present invention, a blockage preventing part for preventing a part of the bag body blocking the gas exhaust port at the time of exhaust of the gas is provided.

For example, when the gas exhaust port is formed on the same surface as a surface to which the pipe of the gas connection part is connected, and a proximal end part of the pipe, which is provided in the vicinity of the gas exhaust port functions as the blockage preventing part, a special member for the blockage preventing part is not required. For this reason, unnecessary increase in costs can be prevented.

In the exhaust gas measuring bag thus configured according to the present invention, a gas filling line into the bag body and a gas exhaust line are separately provided and the gas is exhausted from the gas exhaust port only when the gas in the bag body is exhausted by the valve. Therefore, there is no influence of a pressure loss on the gas filling line at the time of exhaust, and back purge and back dump can be performed in a short period of time.

That is, it is possible to provide the exhaust gas measuring bag which can smoothly exhaust gas and perform back purge and back dump in a short period of time without leading to an increase in size and costs of the system.

### BRIEF DESCRIPTION OF THE DRAWINGS

Fig. 1 schematically shows an example of an automobile exhaust gas measuring device into which an exhaust gas measuring bag in accordance with an embodiment of the present invention is incorporated;
Fig. 2 is a front view of an exhaust gas measuring bag in accordance with the embodiment;
Fig. 3 is a side view of the exhaust gas measuring bag in accordance with the embodiment;
Fig. 4 is a perspective view of a connection mode of a gas connection part and pipes in the embodiment;
Fig. 5 is an enlarged view of a main part as a connection of the gas connection part and the pipes in the embodiment;
Fig. 6 is a sectional view taken along D1-D1 in Fig. 5;
Fig. 7 is a sectional view taken along D2-D2 in Fig. 5;
Fig. 8 schematically shows a state where gas is ejected from the pipes in the embodiment;
Fig. 9 is an enlarged sectional view of the main part in the state;
Fig. 10 schematically shows a state where gas is exhausted from a gas exhaust port in the embodiment; and
Fig. 11 is an enlarged sectional view of the main part in the state.

### DETAILED DESCRIPTION OF PREFERRED EMBODIMENT

Hereinafter, an exhaust gas measuring bag in accordance with an embodiment of the present invention will be described referring to figures.

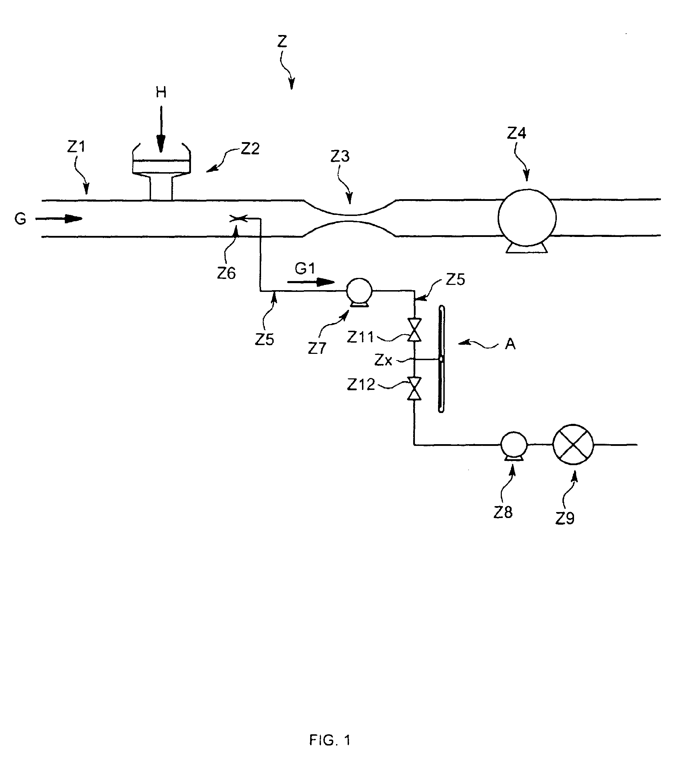

An exhaust gas measuring bag A in accordance with the present embodiment, as shown in Fig. 1, for example, is incorporated for use into an automobile exhaust gas measuring system Z.

Hereinafter, before specifically describing the exhaust gas measuring bag A, the automobile exhaust gas measuring system Z will be briefly described.

The automobile exhaust gas measuring system Z has a sample gas dilution pipe Z1 through which an exhaust gas G exhausted from an automobile engine (not shown) as an exhaust gas source flows, a dilution air inlet tube Z2 which is connected to the sample gas dilution pipe Z1 and introduce dilution air H, a venturi tube Z3 connected downstream from the sample gas dilution pipe Z1, a suction device Z4 which is provided at a duct line downstream from the venturi tube Z3 and sucks exhaust gas diluted by the dilution air H (hereinafter referred to as diluted exhaust gas G1) with a predetermined flow rate Q1 and a constant volume sampling passage Z5 which samples the diluted exhaust gas G1 of constant volume flowing through the sample gas dilution pipe Z1. A gas sampling part Z6 formed of a venturi tube having the same function as the venturi tube Z3, an upstream-side pump Z7, the exhaust gas measuring bag A, a downstream-side suction pump Z8 and a gas analyzing part Z9 are provided on the constant volume sampling passage Z5 in this order.

When the exhaust gas measuring bag A is filled with the diluted exhaust gas G1, given that a flow rate at the time of suction of the diluted exhaust gas G1 by the gas sampling part Z6 is Q2, the upstream-side pump Z7 on the constant volume sampling passage Z5 is operated so that Q2/Q1 may be constant at all times.

Then, when a downstream-side on-off valve Z12 is closed at a connection point Zx on the constant volume sampling passage Z5 with the exhaust gas measuring bag A and an upstream-side on-off valve Z11 is opened, the exhaust gas measuring bag A is filled with the diluted exhaust gas G1.

As described above, when the diluted exhaust gas G1 filled in the exhaust gas measuring bag A is analyzed by the gas analyzing part Z9, by closing the upstream-side on-off valve Z11 of the exhaust gas measuring bag A and opening the downstream-side on-off valve Z12 of the exhaust gas measuring bag A, the diluted exhaust gas G1 as the sample gas can be fed to the gas analyzing part Z9 and analyzed.

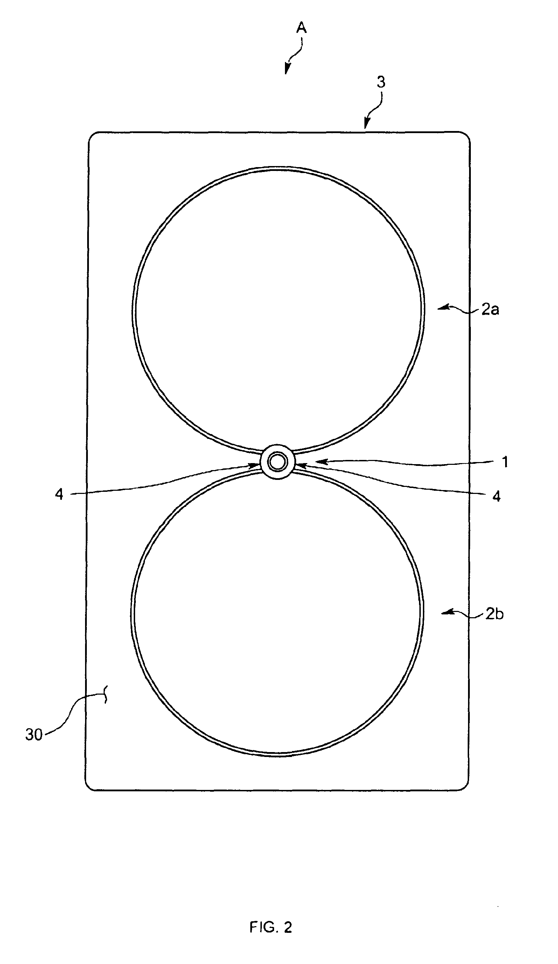

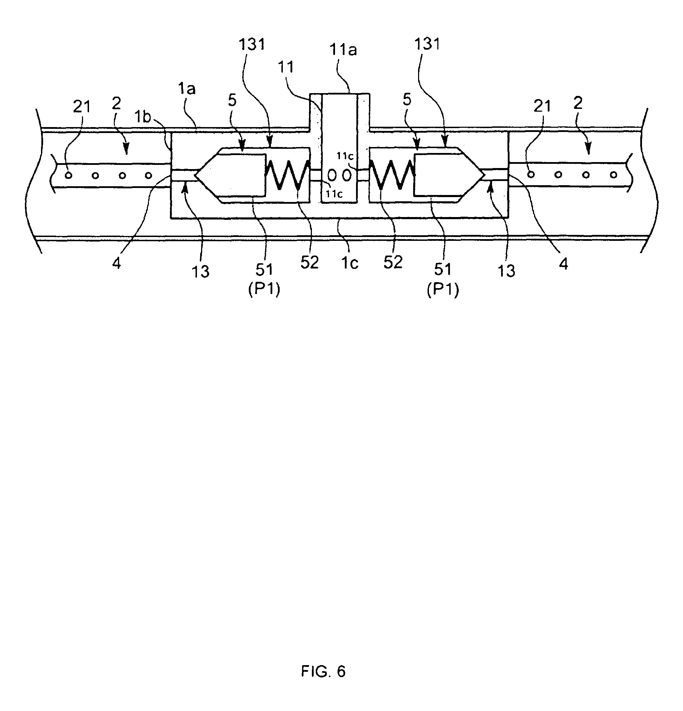

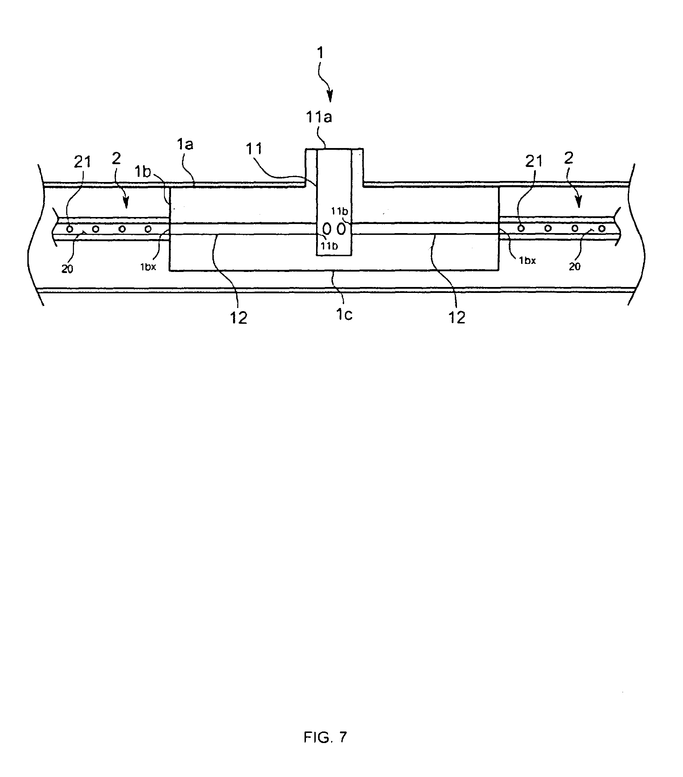

The exhaust gas measuring bag A, as shown in Figs. 1 to 7, includes a gas connection part 1 which is connected to the constant volume sampling passage Z5 as an external passage and has an internal passage 10 flowing the diluted exhaust gas G1 therethrough taken from the constant volume sampling passage Z5, pipes 2a, 2b (hereinafter collectively referred to as a pipe 2) as an internal passage of the gas connection part 1, on which a plurality of gas inlet/outlet holes 21 as gas ejection holes for ejecting the diluted exhaust gas G1 (corresponding to "gas ejection holes" of the present invention. In the present embodiment, since the gas leaves from the holes at the filling of the gas and enters from the holes at time of exhaust of the gas, the holes are referred to as gas inlet/outlet holes) are formed, a bag body 3 which is deformable and has an internal space 30 for storing a connection side of the gas connection part 1 to the pipe 2 and the whole of the pipe 2 therein and encloses the diluted exhaust gas G1 ejected from the gas inlet/outlet holes 21 in the internal space 30, and a gas exhaust port 4 which is provided separately from the gas inlet/outlet holes 21 and forcibly exhausts the diluted exhaust gas G1 enclosed in the internal space 30.

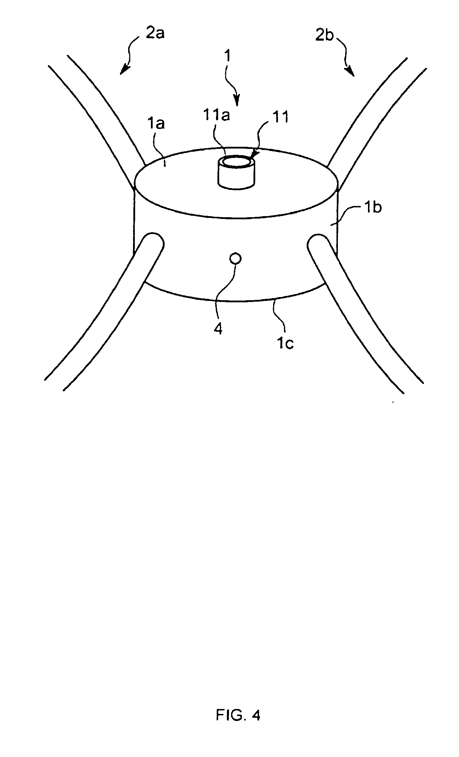

The gas connection part 1, as shown in Fig. 4 or the like, is substantially cylindrical in appearance and has the internal passage 10 (not shown in Fig. 4) which pass the pipe 2 from a top surface 1a to a side peripheral surface 1b.

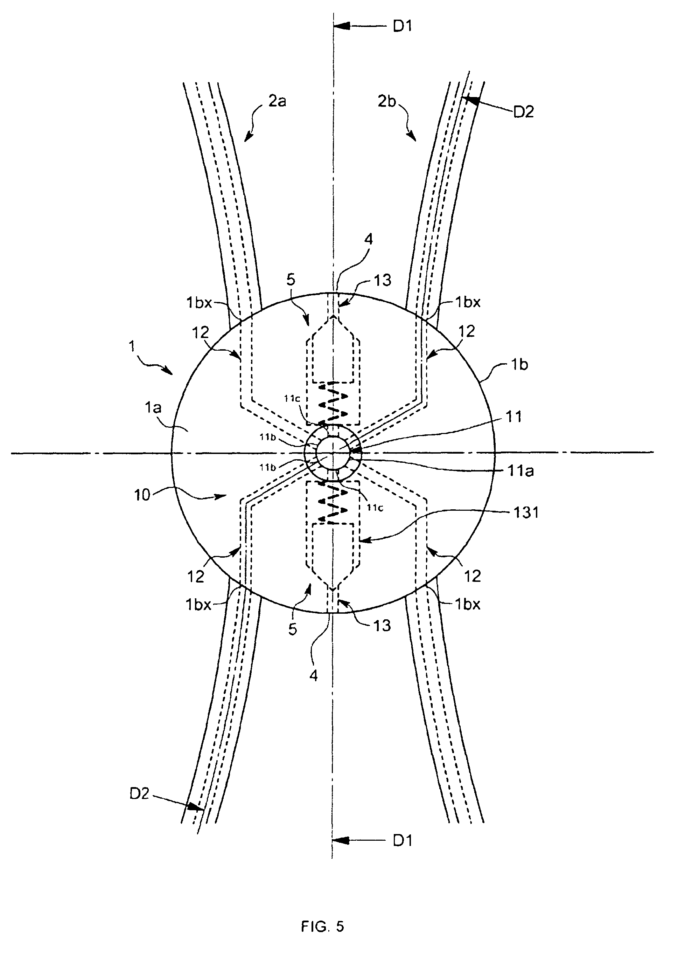

Specifically, the internal passage 10, as shown in Figs. 5, 6, and 7, includes a closed-end central passage 11 having a substantially circular cross section, which extends from the center of the top surface 1a toward a bottom surface 1c, a flow dividing passage 12 having a substantially circular cross section, which connects an opening 11b formed on an inner wall surface of the central passage 11 to an opening 1bx formed on the side peripheral surface 1b and an exhaust passage 13 which connects an opening 11c formed on an inner wall surface of the central passage 11 to the gas exhaust port 4 formed on a side peripheral surface.

The central passage 11 is connected to the constant volume sampling passage Z5 according to an appropriate method. The gas connection part 1 can be easily connected to the constant volume sampling passage Z5 by protruding a little a side of the opening 11a of the central passage 11 from the top surface 1a. In the present embodiment, an inner diameter of the central passage 11 is set to be larger than that of the pipe 2.

The flow dividing passage 12 is connected to the pipe 2 at the opening 1bx formed on the side peripheral surface 1b according to an appropriate method. In the present embodiment, the inner diameter of the flow dividing passage 12 is set to be substantially same as that of the pipe 2.

The exhaust passage 13 has a storage part 131 which stores an actuator 51 of a check valve 5 described later.

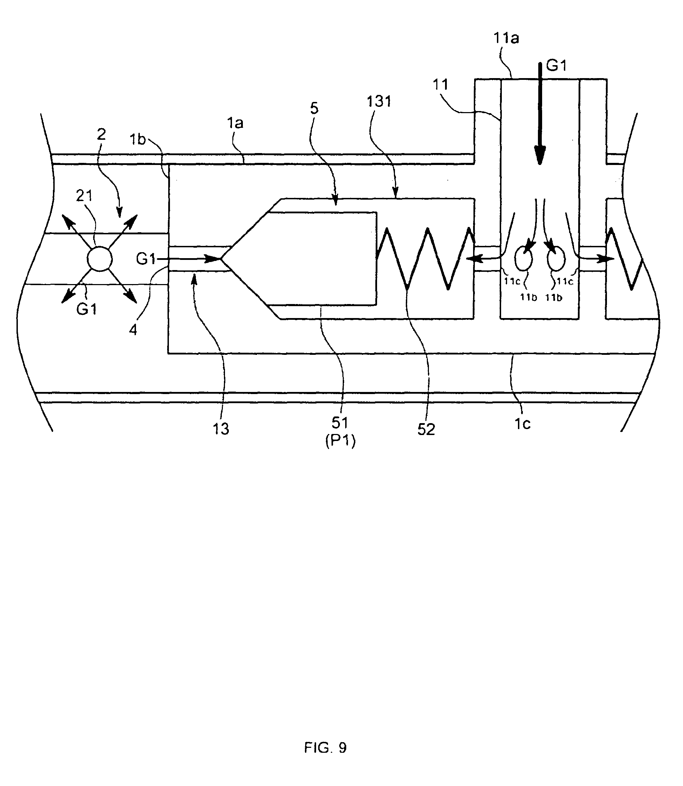

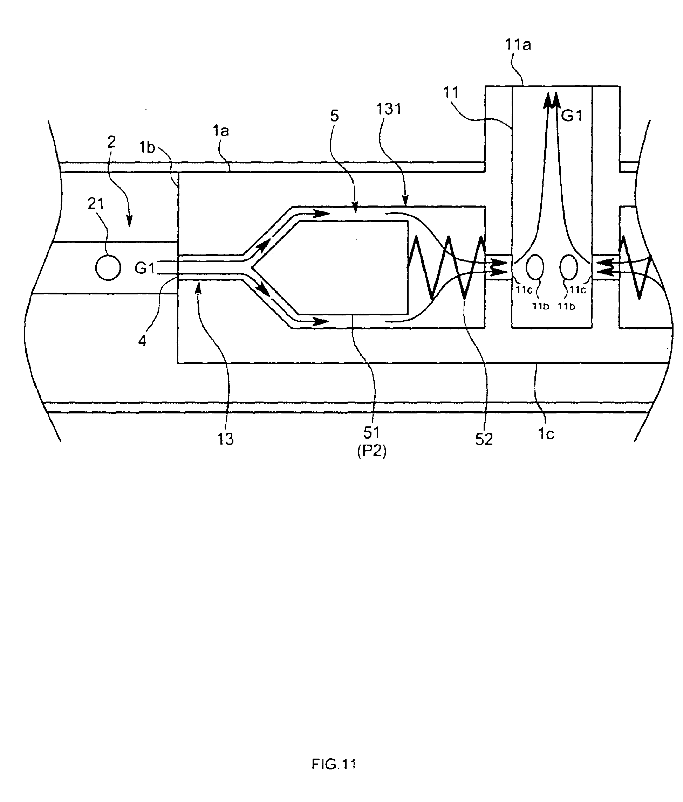

The check valve 5 allows the diluted exhaust gas G1 to pass at the time of forcible exhaust and, on the other hand, prevents the passage at the time of non-exhaust. Specifically, the check valve 5 has the actuator 51 which can move forward and backward between a closed position (P1) where the exhaust passage 13 is closed (refer to Fig. 9) and an opened position (P2) where the exhaust passage 13 is opened (refer to Fig. 11) and a biasing member 52 such as a spring for biasing the actuator 51 from the opened position (P2) toward the closed position (P1) at all times. The check valve 5 allows the diluted exhaust gas G1 to pass by moving the actuator 51 from the closed position (P1) to the opened position (P2) with the exhaust force of exhausting the diluted exhaust gas G1 exceeding the biasing force of the biasing member 52 at the time of forcible exhaust of the gas, and prevents the passage of the gas by at the time of non-exhaust by maintaining the actuator 51 at the opened position (P2).

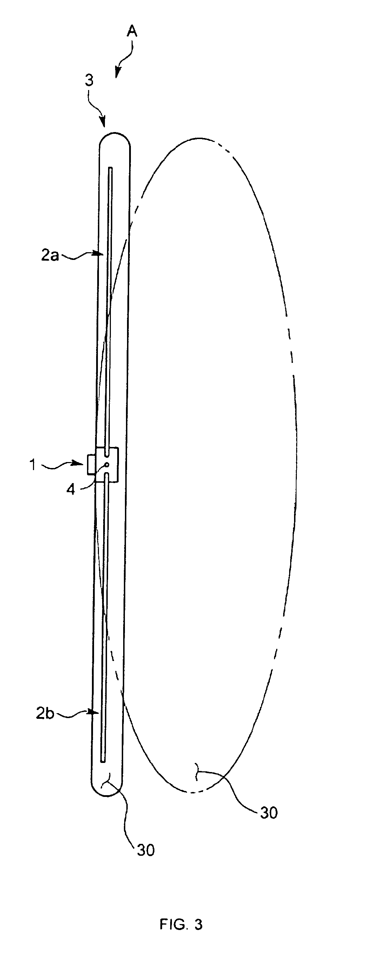

The bag body 3 is formed elastically by bonding, for example, fluororesin sheets to each other and swells by filling of gas in a thickness direction of the bag body 3 as shown in an imaginary line in Fig. 3.

The pipe 2 has a substantial uniform cross section in a longitudinal direction and is made of fluororesin. In the present embodiment, by connecting a part of each of the two substantially circular pipes 2 to the gas connection part 1, the two pipes 2 are shaped like a numeral 8 when viewed in a plan view.

Each pipe 2 has a plurality of gas inlet/outlet holes 21 at regular intervals on a peripheral wall thereof along the whole length. In the present embodiment, the gas inlet/outlet holes 21 each has a diameter of appropriate size (so as to be minimized while controlling so that the pressure loss may be as small as possible). By forming the gas inlet/outlet holes 21 along the outer periphery of the pipe 2 in the direction perpendicular to the thickness direction of the bag body 3, the gas inlet/outlet holes 21 are prevented from being blocked with the bag body 3 shrunk at the time of forcible exhaust of the gas.

Using the exhaust gas measuring bag A thus configured, operations of measuring the diluted exhaust gas G1, especially, operations of filling the exhaust gas measuring bag A with the diluted exhaust gas G1 and operations of exhausting the gas will be described.

### (1) Operation of filling the exhaust gas measuring bag A with the diluted exhaust gas G1

First, to fill the exhaust gas measuring bag A with the diluted exhaust gas G1, the upstream-side pump Z7 of the constant volume sampling passage Z5 is operated.

At this time, given that the flow rate at the time when the diluted exhaust gas G1 is sucked by the gas sampling part Z6 is Q2, the upstream-side pump Z7 is operated so that Q2/Q1 may be constant at all times. Here, Q1 is a flow rate at the time when the suction device Z4 sucks the diluted exhaust gas G1 by a dilution air H.

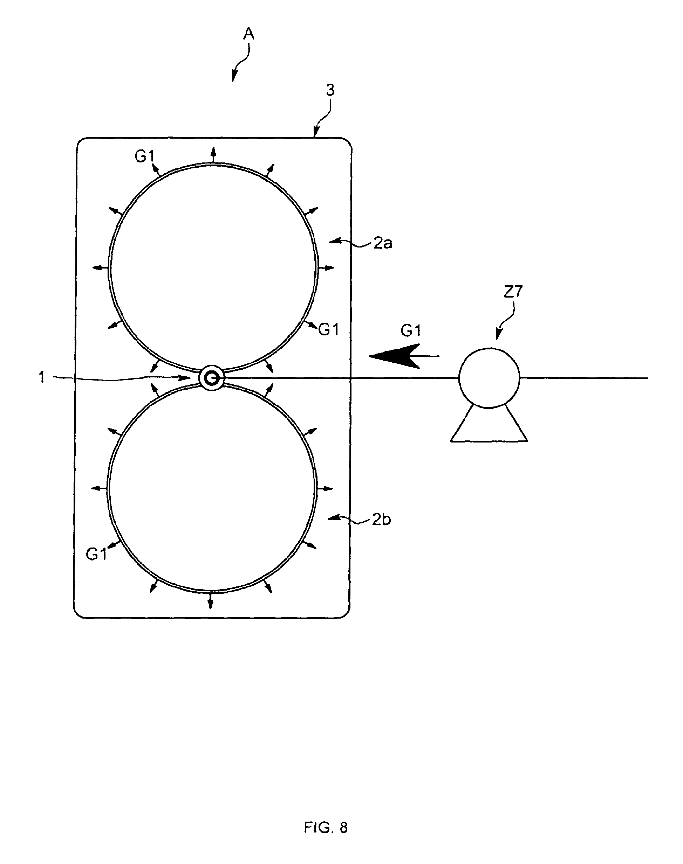

Then, when the downstream-side on-off valve Z12 is closed and the upstream-side on-off valve Z11 is opened at the connection point on the constant volume sampling passage Z5 connected to the exhaust gas measuring bag A, the diluted exhaust gas G1 is introduced into the pipe 2 through the central passage 11 and the flow dividing passage 12 of the gas connection part 1 due to pressure of the upstream-side pump Z7 and then ejected into the bag body 3 through the plurality of gas inlet/outlet holes 21 formed on the pipe 2 (refer to Fig. 8). In this manner, the diluted exhaust gas G1 ejected into the bag body 3 through the gas inlet/outlet holes 21 uniformly spread in the bag body 3, resulting in that the bag body 3 is filled with the gas G1 of uniform concentration.

As described above, since the actuator 51 in the exhaust passage 13 connected to the central passage 11 is biased from the opened position (P2) toward the closed position (P1) due to pressure of the upstream-side pump Z7 (pressure of the diluted exhaust gas G1) as shown in Fig. 9 when the diluted exhaust gas G1 is ejected into the bag body 3, the exhaust passage 13 remains blocked. Accordingly, there is no possibility that the pressure for ejection is lowered by the exhaust passage 13 and the ejecting force of the diluted exhaust gas G1 through the gas inlet/outlet holes 21 is weakened, leading to insufficient mixing of the exhaust gas and the diluted air.

### (2) Operations of exhausting the diluted exhaust gas G1 to the exhaust gas measuring bag A

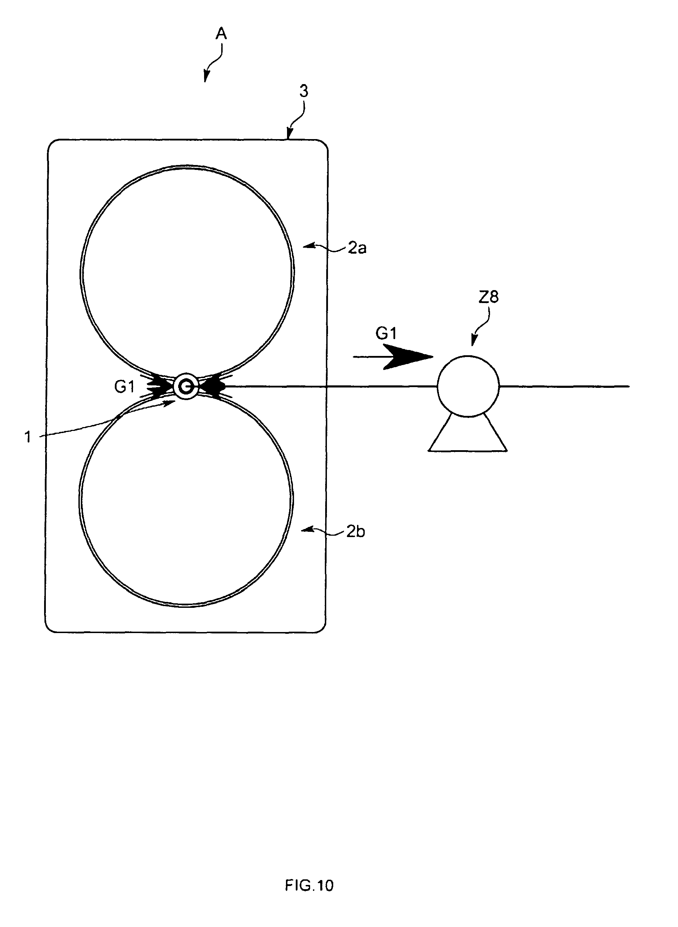

First, the upstream-side on-off valve 12 of the exhaust gas measuring bag A is closed while the downstream-side on-off valve 13 is opened. Then, the downstream-side suction pump Z8 provided downstream from the exhaust gas measuring bag A is operated (refer to Fig. 10). Thus, pressure in the central passage 11 of the gas connection part 1 of the exhaust gas measuring bag A is reduced by the downstream-side suction pump Z8. The actuator 51 in the exhaust passage 13 connected to the central passage 11, as shown in Fig. 11, is moved from the closed position (P1) to the opened position (P2) and the exhaust passage 13 is put into the opened state from the closed state.

The gas inlet/outlet holes 21 formed on the pipe 2 is configured to have a minimum size so as not to increase a pressure loss. However, in the present embodiment, since the exhaust gas is ejected from the gas inlet/outlet holes 21 as well as the exhaust passage 13 at the time of exhaust of the gas, the diluted exhaust gas G1 filled in the bag body 3 can be easily exhausted.

Furthermore, since the gas inlet/outlet holes 21 formed on the pipe 2 also serve to gas deriving holes for deriving the diluted exhaust gas G1 to the outside, the holes are helpful in increasing the exhaust speed.

When exhaust is continued in this manner, the bag body 3 shrinks in the thickness direction so that the internal space 30 is reduced. However, since the gas exhaust port 4 is formed on the side peripheral surface 1b of the gas connection part 1 as the surface connected to a proximal end part of the pipe 2, the proximal end part of the pipe 2, which is provided in the vicinity of the gas exhaust port 4, functions as a blockage preventing part for preventing blockage of the gas exhaust port 4, thereby preferably preventing the gas exhaust port 4 being blocked by the shrunk bag body 3. Accordingly, even when the bag body 3 shrinks and the diluted exhaust gas G1 hardly remains in the internal space 30, the gas G1 can be exhausted from the gas exhaust port 4. Thus, the diluted exhaust gas G1 in the bag body 3 can be completely exhausted.

In the exhaust gas measuring bag A in the present embodiment, the gas inlet/outlet holes 21 for ejecting the gas into the internal space 30 are provided separately from the gas exhaust port 4 for forcibly exhausting the gas enclosed in the internal space 30 and the gas is exhausted from the gas exhaust port 4 only when the gas in the bag body 3 is exhausted by the check valve 5. Thus, a decrease in the exhaust speed due to a pressure loss at the time of exhaust of gas does not occur, leading no increase in size and costs of the system. The disadvantage that a part of the bag body 3 closes the gas exhaust port 4 at the time of exhaust of gas can be prevented by the proximal end part of the pipe 2, which serves as a blockage preventing part, and thus, a decrease in the exhaust speed due to such disadvantage can be prevented.

That is, it is possible to provide the exhaust gas measuring bag A which can smoothly exhaust gas and perform back purge and back dump in a short period of time without leading to an increase in size and costs of the system.

The present invention is not limited to the embodiment.

For example, the blockage preventing part is not limited to the proximal end part of the pipe 2. For example, a protrusion provided in the vicinity of the gas exhaust port 4 may be used as the blockage preventing part.

Although the gas exhaust port 4 is integral with the gas connection part 1, the gas exhaust port 4 may be provided at a member (not shown) separated from the gas connection part.

The proximal end part of the pipe 2 and the gas exhaust port may be provided on the bottom surface or the other surface of the gas connection part.

In the present embodiment, the check valve is used as a valve, but the valve is not limited to the check valve and may be any type of valve such as an electromagnetic valve.

Configuration of the gas connection part 1 is not limited to that in the present embodiment.

The present invention is not limited to the embodiment and various modifications can be made so as not to deviate from the scope of the present invention.

## Claims

1. An exhaust gas measuring bag (A)
comprising:
a gas connection part (1) which is connected to an external passage (Z5) flowing measurement gas therethrough for analyzing various components included in the exhaust gas (G) of the automobile etc. and has an internal passage (10) flowing the gas (G1) taken from the external passage (Z5) therethrough;
a pipe (2, 2a, 2b) which is connected to the internal passage (10) of the gas connection part (1) and on which a plurality of gas ejection holes (21) for ejecting the gas (G1) are formed;
a bag body (3) which is deformable and has an internal space (30) for storing at least a connection side of the gas connection part (1) to the pipe and the whole of the pipe (2, 2a, 2b) therein and encloses the gas ejected from the gas ejection holes (21) into the internal space (30) therein;
a gas exhaust port (4) which is provided at the gas connection part (1) or a member separated from the gas connection part (1) and exhausts the gas enclosed in the internal space (30) to the external passage (Z5); and
a valve (5) which is disposed on an exhaust passage (13) connecting the gas exhaust port (4) to the external passage (Z5), opens the exhaust passage (13) at the time of exhaust of the gas, thereby allowing the gas to pass and closes the exhaust passage (13) at the time of non-exhaust of the gas, thereby preventing passage of the gas.

2. The exhaust gas measuring bag (A) according to claim 1,
wherein the valve (5) is a check valve including an actuator (51) which can move forward and backward between a closed position where the exhaust passage (13) is closed and an opened position where the exhaust passage (13) is opened and a biasing member (52) for biasing the actuator (51) from the opened position toward the closed position at all times.

3. The exhaust gas measuring bag (A) according to claim 2,
- wherein the internal passage (10) comprises a central passage (11), an end of which is connected to the external passage (Z5), a flow dividing passage (12), an end of which is connected to the pipe (2, 2a, 2b) and an exhaust passage (13), an end of which is provided with the gas exhaust port (4), and at least connects parts of internal space in the central passage (11), the flow dividing passage (12) and the exhaust passage (13) to each other, and
- wherein the check valve (5) is disposed on the exhaust passage (13).

4. The exhaust gas measuring bag (A) according to any of claims 1 to 3,
further comprising a blockage preventing part for preventing a part of the bag body blocking the gas exhaust port at the time of exhaust of the gas.

5. The exhaust gas measuring bag (A) according to claim 4, wherein
- wherein the gas exhaust port (4) is formed on the same surface (1b) as the surface (1b) to which the pipe (2, 2a, 2b) of the gas connection part is connected, and
- wherein a proximal end part of the pipe (2, 2a, 2b), which is provided in the vicinity of the gas exhaust port (4) functions as the blockage preventing part.
